# EUROPEAN PATENT SPECIFICATION

(11) **EP 2 653 826 B1**
(45) Date of publication and mention of the grant of the patent: **19.02.2020**
(21) Application number: 13163799.3
(22) Date of filing: 15.04.2013
(51) Int. Cl.: G01B 5/20

(54) **Measuring tool for a disc coil**
Messinstrumente für eine Scheibenspule
Outil de mesure pour bobine de disque

(30) Priority: 19.04.2012 EP 12290137
(43) Date of publication of application: 23.10.2013
(73) Proprietor: General Electric Technology GmbH, 5400 Baden (CH)
(72) Inventor: Schweitzer, Michel, 70290 Plancher-Bas (FR)
(74) Representative: BRP Renaud & Partner mbB Rechtsanwälte Patentanwälte Steuerberater

(56) References cited:
- US-A- 4 166 323
- US-A- 4 285 133
- US-A1- 2011 247 436

## Description

### TECHNICAL FIELD

The present disclosure relates to a measuring tool for a disc coil.

### BACKGROUND

In particular applications such as EMR (Electronic Medical Record) disc coils for magnets are widely used.

These disc coils have a structure formed of a plurality of circular conductive rings (for example made of copper) insulated from one another and concentrically placed one inside the other.

In order to guarantee the high quality of the magnetic field that is required for these kinds of applications, the features of the coils and in particular the geometrical features of the coils must be very precise.

This requires, in addition to high precision manufacturing tools, measuring tools to check the geometrical features of the manufactured coils.

Nevertheless, currently such measuring tools are not available.

### SUMMARY

An aspect of the disclosure includes providing a measuring tool for a disc coil that permits precise measures of the geometrical features of the coils.

These and further aspects are attained by providing a measuring tool in accordance with the accompanying claims.

### BRIEF DESCRIPTION OF THE DRAWINGS

Further characteristics and advantages will be more apparent from the description of a preferred but non-exclusive embodiment of the tool, illustrated by way of non-limiting example in the accompanying drawings, in which:
Figures 1 and 2 show a schematic view of the tool in a first embodiment and a detail thereof;
Figure 3 shows a schematic view of the tool in a second embodiment; and

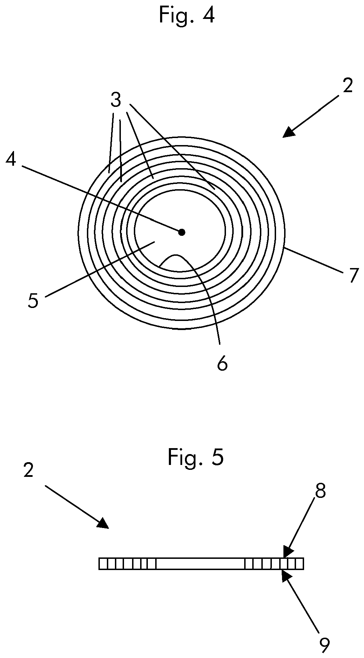

Figures 4 and 5 schematically show a disc coil.

### DETAILED DESCRIPTION OF EXEMPLARY EMBODIMENTS

With reference to the figures, these show a measuring tool 1 for a disc coil 2.

The disc coil 2 comprises a plurality of conductive rings 3, for example made of copper. The rings 3 are coaxial about an axis 4.

In addition, the disc coil 2 has an annular structure that defines a central hole 5 delimited by an inner border 6, and an outer border 7. The disc coil 2 also has two opposite faces 8, 9.

The geometrical features of this disc coil 2 must be precisely measured. For example the geometrical features include the circularity of each ring 3 forming the disc coil 2 or the parallelism of the faces 8, 9 of the disc coil 2.

In order to measure these features, the measuring tools 1 can be used.

The measuring tool 1 comprises a frame 10 with one or more carriers 11, 12 on the frame 10. The carriers 11, 12 have movable supports 13, 14.

In addition, each movable support 13, 14 carries a gauge 16, 17 for measuring a geometrical features of the disc coil.

The carriers with movable supports can be actuators. For example, the first carrier 11 can be a pneumatic cylinder and the movable support 13 can be the piston of the pneumatic cylinder. Likewise, the second carrier 12 can be a pneumatic cylinder and the movable support 14 can be the piston of the pneumatic cylinder. Naturally different type of actuators can also be used, such as for example hydraulic actuators, electric actuators, etc.

The gauges are preferably position gauges, such as contact gauges.

Preferably the frame 10 includes or is connected to a support 20 for the coil 2.

The support 20 is preferably rotatable with respect to the frame 10; for example the support can be fixed and the frame can rotate or the frame can be fixed and the support can rotate.

The support 20 for the coil 2 includes a central element 21 arranged to hold the coil 2 at the hole 5. The support 20 also includes a strut 22 connected to the central element 21.

In different examples the central element 21 can be connected below the strut 22 or above the strut 22.

In a preferred embodiment, the tool 1 has a first carrier 11 with a movable support 13 and a first gauge 16, and a second carrier 12 with a movable support 14 and a second gauge 17.

In addition, also a sensor 25 of the angular position is preferably provided.

The first and second carriers 11, 12 and the sensor 25 of the angular position are connected to a control unit 27.

For example, the first gauge 16 can be arranged to follow the circumferential path of the rings 3 and generate a first signal indicative thereof, the second gauge 17 can be arranged to follow the path of the outer border 7 of the disc coil 2 and generate a second signal indicative thereof. The control unit can thus be arranged to ascertain the shape of each ring 3 with respect to the outer border 7, by calculating the difference between the first signal and the second signal or vice versa.

The support 20 can also include a number of struts 22 and can define a supporting plane 28 for the coil 2. In this case the coil 2 can lie in the supporting plane 28 when connected to the central element 21; in addition, the first gauge 16 and the second gauge 17 of the tool 1 can be positioned one above and the other below the supporting plane 28.

The tool 1 can also be provided with an inclinometer 30, for example supported by to one of the carriers 11, 12 and connected to the control unit 27.

In the following two examples of the tool are described in detail.

### Example 1

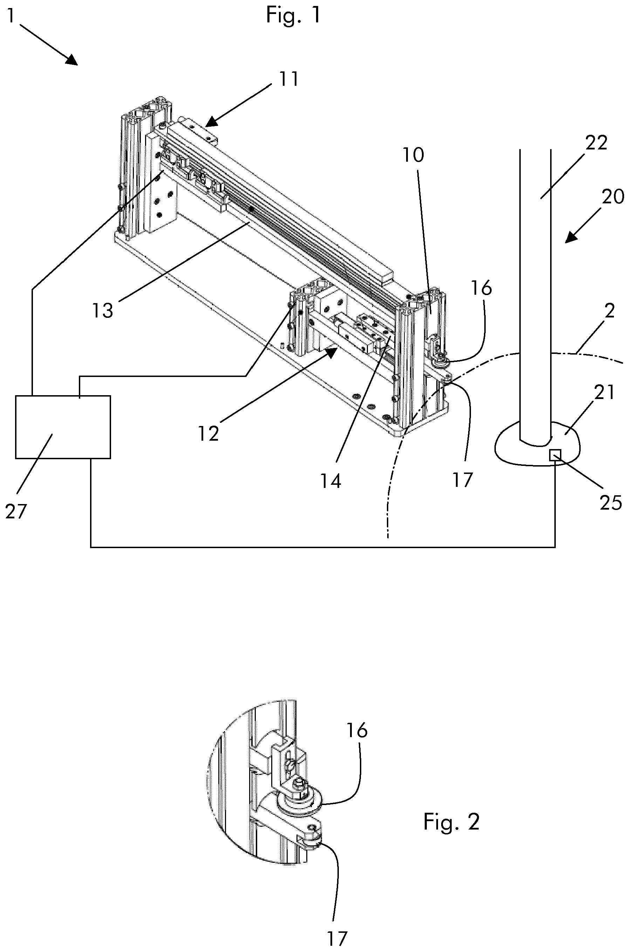

The tool shown at figures 1 and 2 can be used to measure the circularity of the rings 3 of the disc coil 2.

As it is apparent from the drawings, the disc coil 2 is supported by the central element 21 and faces the gauges 16, 17.

The gauge 16 follows the path of each ring 3 and transmits a signal indicative of its position via the carrier 12 to the control unit 27. The gauge 17 follows the path of the outer perimeter of the disc coil 2 and also transmits a signal indicative of its position to the control unit 27.

In addition, also the sensor 25 of the angular position transmits a signal indicative of its position (and therefore also indicative of the position of the disc coil 2 connected to it) to the control unit 27.

The control unit 27 on the basis of these signals can calculate the path of each ring 3 with respect to the outer disc coil perimeter and, thus, the circularity of each ring 3.

### Example 2

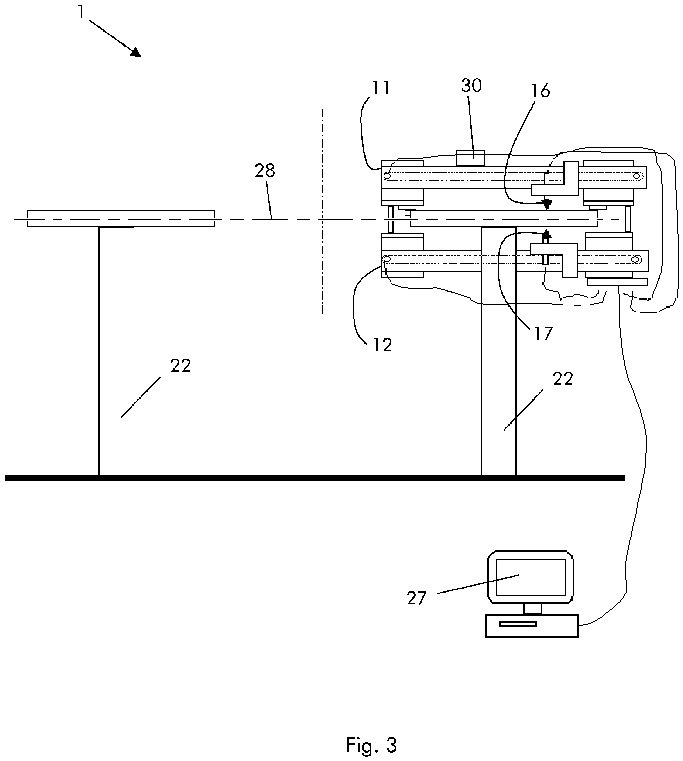

Figure 3 shows a different example of the tool 1. The tool 1 in this example can be used to measure the parallelism of the faces 8, 9 of the disc coil 2.

As shown in figure 3, the tool 1 can have the struts 22 (preferably more than one) that support the disc coil 2 in the supporting plane 28.

The frame 10 supports the carriers 11, 12 with the movable supports 13, 14 and the gauges 16, 17. The gauges 16, 17 are located at opposite sides (i.e. one above and the other below) with respect to the supporting plane 28. The gauges 16, 17 are position gauges and are both used on one ring 3 of the disc coil 2 at a time.

In addition, in this embodiment also the inclinometer 30 is preferably provided (naturally the sensor 25 of the angular position can be provided as well).

The first and second gauges 16, 17 and the inclinometer 30 generate signals that are transmitted to the control unit 27. The control unit 27 on the basis of these signals can virtually reconstruct the surfaces 8, 9 and ascertain their parallelism. The inclinometer can be used to compensate for a possible non-correct orientation of the carriers 11, 12 (the carriers 11, 12 should be horizontal in the embodiment shown.

Naturally the features described may be independently provided from one another.

In practice the materials used and the dimensions can be chosen at will according to requirements and to the state of the art.

### REFERENCE NUMBERS

- 1: tool
- 2: disc coil
- 3: ring
- 4: axis
- 5: central hole
- 6: inner border
- 7: outer border
- 8: face
- 9: face
- 10: frame
- 11: carrier
- 12: carrier
- 13: support
- 14: support
- 16: gauge
- 17: gauge
- 20: support
- 21: central element
- 22: strut
- 25: sensor
- 27: control unit
- 28: supporting plane
- 30: inclinometer

## Claims

1. A measuring tool (1) for a disc coil (2) assigned to the measuring tool (1), the tool (1) comprising
a frame (10) that includes a support (20) for the disc coil (2),
at least a carrier (11, 12) on the frame (10), the carrier (11, 12) having movable supports (13, 14), a gauge (16, 17) on the movable supports (13, 14) configured for measuring geometrical features of the disc coil (2), the disc coil (2) includes a plurality of coaxial annular rings (3),
that the at least a carrier (11, 12) with movable supports (13, 14) provided with the gauge (16, 17) includes
a first carrier (11) with a movable support (13) and a first position gauge (16), and
a second carrier (12) with a movable support (14) and a second position gauge (17),
the first and second carriers (11, 12) adapted to be connected to a control unit (27),
the first position gauge (16) is arranged to follow the circular path of a plurality of coaxial rings (3) included by the disc coil (2) and generate a first signal indicative thereof,
the second position gauge (17) is arranged to follow the circular path of an outer border (7) of the disc coil (2) and generate a second signal indicative thereof, **characterized in that**
a control unit (27) is arranged to ascertain the shape of each ring (3) with respect to the outer border (7) by calculating the difference between the first signal and the second signal or vice versa.

2. The tool (1) according to claim 1, **characterised in that** the disc coil (2) has an annular structure with a central hole (5), wherein the support (20) for the disc coil (2) includes a central element (21) arranged to hold the disc coil (2) at the central hole (5).

3. The tool (1) according to claim 2, **characterised in that** the support (20) also includes at least a strut (22) connected to the central element (21).

4. The tool (1) according to claim 3, **characterised in that** the central element (21) is connected below the strut (22).

5. The tool (1) according to claim 3, **characterised in that** the central element (21) is connected above the strut (22).

6. The tool (1) according to claim 1, **characterised in that** the support (20) is rotatable with respect to the frame (10).

7. The tool (1) according to claim 1, **characterised by** further comprising a sensor (25) of the angular position, the sensor (25) of the angular position being connected to the control unit (27).

8. The tool (1) according to claim 1, **characterised in that** the support (20) defines a supporting plane (28) for the disc coil (2), wherein the disc coil (2) lies in the supporting plane (28) when connected to a central element (21) of the support, wherein the first gauge (16) and the second gauge (17) of the tool (1) are positioned one above and the other below the supporting plane (28).

9. The tool (1) according to claim 1, **characterised by** comprising at least an inclinometer (30) supported by at least one of the carriers (11, 12) and connected to the control unit (27).

## Patentansprüche

1. Messinstrument (1) für eine dem Messinstrument (1) zugeordnete Scheibenspule (2), wobei das Instrument (1) einen Rahmen (10) umfasst, der eine Stütze (20) für die Scheibenspule (2) einschließt,
mindestens einen Träger (11, 12) auf dem Rahmen (10), wobei der Träger (11, 12) bewegliche Stützen (13, 14) aufweist,
ein Messgerät (16, 17) auf den beweglichen Stützen (13, 14), das zum Messen geometrischer Merkmale der Scheibenspule (2) konfiguriert ist, wobei die Scheibenspule (2) eine Vielzahl von koaxialen ringförmigen Ringen (3) einschließt,
dass der mindestens eine Träger (11, 12) mit beweglichen Stützen (13, 14), die mit dem Messgerät (16, 17) bereitgestellt sind, einschließt
einen ersten Träger (11) mit einer beweglichen Stütze (13) und einem ersten Positionsmessgerät (16) und
einen zweiten Träger (12) mit einer beweglichen Stütze (14) und einem zweiten Positionsmessgerät (17),
wobei der erste und der zweite Träger (11, 12) angepasst sind, um mit einer Steuereinheit (27) verbunden zu werden,
wobei das erste Positionsmessgerät (16) eingerichtet ist, um dem Kreisweg einer Vielzahl von koaxialen Ringen (3) zu folgen, die durch die Scheibenspule (2) eingeschlossen sind, und ein erstes Signal zu erzeugen, das dies anzeigt,
wobei das zweite Positionsmessgerät (17) eingerichtet ist, um dem Kreisweg eines äußeren Randes (7) der Scheibenspule (2) zu folgen und ein zweites Signal zu erzeugen, das dies anzeigt, **dadurch gekennzeichnet, dass**
eine Steuereinheit (27) eingerichtet ist, um die Form jedes Ringes (3) in Bezug auf den äußeren Rand (7) durch Berechnen der Differenz zwischen dem ersten Signal und dem zweiten Signal oder umgekehrt zu ermitteln.

2. Instrument (1) nach Anspruch 1, **dadurch gekennzeichnet, dass** die Scheibenspule (2) eine ringförmige Struktur mit einer zentralen Bohrung (5) aufweist, wobei die Stütze (20) für die Scheibenspule (2) ein zentrales Element (21) einschließt, das eingerichtet ist, um die Scheibenspule (2) an der zentralen Bohrung (5) zu halten.

3. Instrument (1) nach Anspruch 2, **dadurch gekennzeichnet, dass** die Stütze (20) auch mindestens eine mit dem zentralen Element (21) verbundene Strebe (22) einschließt.

4. Instrument (1) nach Anspruch 3, **dadurch gekennzeichnet, dass** das zentrale Element (21) unterhalb der Strebe (22) verbunden ist.

5. Instrument (1) nach Anspruch 3, **dadurch gekennzeichnet, dass** das zentrale Element (21) oberhalb der Strebe (22) verbunden ist.

6. Instrument (1) nach Anspruch 1, **dadurch gekennzeichnet, dass** die Stütze (20) in Bezug auf den Rahmen (10) drehbar ist.

7. Instrument (1) nach Anspruch 1, **dadurch gekennzeichnet, dass** es ferner einen Sensor (25) der Winkelposition umfasst, wobei der Sensor (25) der Winkelposition mit der Steuereinheit (27) verbunden ist.

8. Instrument (1) nach Anspruch 1, **dadurch gekennzeichnet, dass** die Stütze (20) eine Stützebene (28) für die Scheibenspule (2) definiert, wobei die Scheibenspule (2) in der Stützebene (28) liegt, wenn sie mit einem zentralen Element (21) der Stütze verbunden ist, wobei das erste Messgerät (16) und das zweite Messgerät (17) des Instruments (1) eines oberhalb und das andere unterhalb der Stützebene (28) positioniert sind.

9. Instrument (1) nach Anspruch 1, **dadurch gekennzeichnet, dass** es mindestens einen Neigungsmesser (30) umfasst, der durch mindestens einen der Träger (11, 12) getragen wird und mit der Steuereinheit (27) verbunden ist.

## Revendications

1. Outil de mesure (1) pour une bobine de disque (2) attribuée à l'outil de mesure (1), l'outil (1) comprenant un cadre (10) qui inclut un support (20) pour la bobine de disque (2), au moins un élément porteur (11, 12) sur le cadre (10), l'élément porteur (11, 12) ayant des supports mobiles (13, 14), une jauge (16, 17) sur les supports mobiles (13, 14) configurée pour mesurer des caractéristiques géométriques de la bobine de disque (2), la bobine de disque (2) inclut une pluralité de bagues annulaires coaxiales (3), l'au moins un élément porteur (11, 12) avec des supports mobiles (13, 14) dotés de la jauge (16, 17) inclut un premier élément porteur (11) avec un support mobile (13) et une première jauge de position (16) et un deuxième élément porteur (12) avec un support mobile (14) et une deuxième jauge de position (17), les premier et deuxième éléments porteurs (11, 12) adaptés pour être reliés à une unité de commande (27), la première jauge de position (16) est agencée pour suivre la trajectoire circulaire d'une pluralité de bagues coaxiales (3) incluses par la bobine de disque (2) et générer un premier signal indicatif de celle-ci, la deuxième jauge de position (17) est agencée pour suivre la trajectoire circulaire d'une limite externe (7) de la bobine de disque (2) et générer un deuxième signal indicatif de celle-ci, **caractérisé en ce qu'**une unité de commande (27) est agencée pour vérifier la forme de chaque bague (3) par rapport à la limite externe (7) en calculant la différence entre le premier signal et le deuxième signal ou inversement.

2. Outil (1) selon la revendication 1, **caractérisé en ce que** la bobine de disque (2) a une structure annulaire avec un trou central (5), dans lequel le support (20) pour la bobine de disque (2) inclut un élément central (21) agencé pour maintenir la bobine de disque (2) au niveau du trou central (5).

3. Outil (1) selon la revendication 2, **caractérisé en ce que** le support (20) inclut également au moins une entretoise (22) reliée à l'élément central (21).

4. Outil (1) selon la revendication 3, **caractérisé en ce que** l'élément central (21) est relié au-dessous de l'entretoise (22).

5. Outil (1) selon la revendication 3, **caractérisé en ce que** l'élément central (21) est relié au-dessus de l'entretoise (22).

6. Outil (1) selon la revendication 1, **caractérisé en ce que** le support (20) est rotatif par rapport au cadre (10).

7. Outil (1) selon la revendication 1, **caractérisé en ce qu'**il comprend en outre un capteur (25) de la position angulaire, le capteur (25) de la position angulaire étant relié à l'unité de commande (27).

8. Outil (1) selon la revendication 1, **caractérisé en ce que** le support (20) définit un plan de support (28) pour la bobine de disque (2), dans lequel la bobine de disque (2) se trouve dans le plan de support (28) en cas de liaison à un élément central (21) du support dans lequel la première jauge (16) et la deuxième jauge (17) de l'outil (1) sont positionnées l'une au-dessus et l'autre au-dessous du plan de support (28).

9. Outil (1) selon la revendication 1, **caractérisé en ce qu'**il comprend au moins un inclinomètre (30) supporté par au moins l'un des éléments porteurs (11, 12) et relié à l'unité de commande (27).
